# EUROPEAN PATENT APPLICATION

(11) **EP 4 604 229 A1**
(43) Date of publication of application: **20.08.2025**
(21) Application number: 23955009.8
(22) Date of filing: 05.12.2023
(51) Int. Cl.: H01M 10/04

(54) **BATTERY MODULE PRE-STACKING MECHANISM AND BATTERY PRODUCTION LINE**

(30) Priority: 13.10.2023 CN 202311323149
(71) Applicant: Contemporary Amperex Technology (Hong Kong) Limited, Central (HK)
(72) Inventor: YANG, Jun, Ningde, Fujian 352100 (CN); CAO, Xin, Ningde, Fujian 352100 (CN); XU, Yanjun, Ningde, Fujian 352100 (CN)
(74) Representative: Gong, Jinping
(86) International application number: PCT/CN2023/136555
(87) International publication number: WO 2025/076970

(57) **Abstract**

Embodiments of this disclosure provide a pre-stacking mechanism for battery module and a battery production line. The pre-stacking mechanism for battery module includes a workbench, a multi-row pre-stacking mechanism, and a single-row pre-stacking mechanism. The multi-row pre-stacking mechanism is configured to pre-stack multi-row battery cells to form a multi-row battery module. The single-row pre-stacking mechanism is configured to pre-stack single-row battery cells to form a single-row battery module. Both the single-row pre-stacking mechanism and the multi-row pre-stacking mechanism are disposed on the workbench. The pre-stacking mechanism for battery module in the embodiments of this disclosure can improve the efficiency of the battery production line.

## Description

### CROSS-REFERENCE TO RELATED APPLICATIONS

This disclosure claims priority to Chinese patent application No.202311323149.9, filed on October 13, 2023, and entitled "PRE-STACKING MECHANISM FOR BATTERY MODULE AND BATTERY PRODUCTION LINE", which is incorporated herein by reference in its entirety.

### TECHNICAL FIELD

This disclosure relates to the field of battery cell manufacturing technologies, and in particular, to a pre-stacking mechanism for battery module and a battery production line.

### BACKGROUND

New energy batteries are increasingly widely used in life and industries. For example, new energy vehicles equipped with batteries have been widely used. In addition, batteries are increasingly used in the field of energy storage.

In the related art, some battery modules include double-row battery cells and single-row battery cells, and the number of double-row battery cells and single-row battery cells in the battery modules with different specifications is different. Therefore, the existing pre-stacking mechanism is difficult to meet efficiency requirements of a production line.

### SUMMARY

In view of this, embodiments of this disclosure are expected to provide a pre-stacking mechanism for battery module and a battery production line, so that the efficiency of a battery production line can be improved.

To achieve the above purpose, an embodiment of this disclosure provides a pre-stacking mechanism for battery module, including a workbench, a multi-row pre-stacking mechanism, and a single-row pre-stacking mechanism.

The multi-row pre-stacking mechanism is configured to pre-stack multi-row battery cells to form a multi-row battery module.

The single-row pre-stacking mechanism is configured to pre-stack single-row battery cells to form a single-row battery module.

Both the single-row pre-stacking mechanism and the multi-row pre-stacking mechanism are disposed on the workbench.

Both the single-row pre-stacking mechanism and the multi-row pre-stacking mechanism are disposed on the workbench, so that the pre-stacking of the multi-row battery cells and the single-row battery cells can be implemented, thereby improving the efficiency. When the model of the battery module changes, resulting in the change of the number of the multi-row battery cells or the single-row battery cells, it is unnecessary to adjust a pre-stacking mechanism with the single-row pre-stacking mechanism and the multi-row pre-stacking mechanism, which can quickly adapt to the above changes and improve the overall efficiency of the battery production line.

In some embodiments, the pre-stacking mechanism includes:
a bottom support, configured to support the battery module,
a fixed end limiting mechanism, located at one end of the bottom support and configured to limit a larger side of the first column of battery cells in the battery module,
a fixed end positioning mechanism, located at one end of the bottom support and configured to position the first column of battery cells to fix a position of the first column of battery cells; and
a centering clamping mechanism, including a centering clamping assembly and a centering moving assembly, where the centering clamping assembly is configured to center on and clamp a single column of battery cells in the battery module, and the centering moving assembly enables the centering clamping assembly to move between two ends of the bottom support.

A group of the bottom support, the centering clamping mechanism, the fixed end clamping mechanism, and the fixed end limiting mechanism is provided and configured as the multi-row pre-stacking mechanism. A group of the bottom support, the centering clamping mechanism, the fixed end clamping mechanism, and the fixed end limiting mechanism is provided and configured as the single-row pre-stacking mechanism.

In the multi-row pre-stacking mechanism and the single-row pre-stacking mechanism, the battery module is placed on and supported by the bottom support, the centering clamping assembly centers on and clamps the first column of battery cells in the battery module, the centering moving assembly drives the centering clamping assembly cramping the first column of the battery cells to moves towards the fixed end positioning mechanism until the single column of battery cells abut against the fixed end positioning mechanism for positioning, the centering moving assembly drives the centering clamping assembly to move back, the centering clamping assembly clamps the second column of battery cells, and the centering moving assembly drives the centering clamping assembly cramping the second column of the battery cells to move towards the fixed end positioning mechanism, so that a larger side of the second column of the battery cells is aligned with and abutted against a larger side of the first column of the battery cells.

In some embodiments, the pre-stacking mechanism includes:
a movable end limiting mechanism, disposed in the multi-row pre-stacking mechanism, configured to limit a middle part of a larger side of a single column of multi-row battery cells in the multi-row battery module, and being capable of moving between the two ends of the bottom support.

The movable end limiting mechanism is disposed, so that the movable end limiting mechanism limits a middle part of a larger side of the single column of the multi-row battery cells, the movable end limiting mechanism moves with the centering clamping assembly, and the movable end limiting mechanism supports the middle part of the larger side of the single column of the multi-row battery cells during the movement, so as to resist the deflection and inclination of the single column of the multi-row battery cells caused by friction.

In some embodiments, the pre-stacking mechanism includes one bottom distance varying mechanism disposed in the multi-row pre-stacking mechanism.

In the multi-row pre-stacking mechanism, the bottom support includes a first fixed support and a bottom distance varying support, the first fixed support is disposed on the workbench, and two bottom distance varying supports are symmetrically disposed on two sides of the first fixed support respectively.

The bottom distance varying mechanism is drivably connected to the two bottom distance varying supports to adjust a distance between the two bottom distance varying supports.

The first fixed support is supported in the middle of the bottom of the multi-row battery cells, the two bottom distance varying supports are supported on two sides of the bottom of the multi-row battery cells, and the distance between the two bottom distance varying supports can be adjusted, so as to adapt to the multi-row battery cells with different specifications.

In some embodiments, the bottom distance varying mechanism includes:
a distance varying slide rail, disposed on the workbench, where two distance varying slide rails are respectively supported at two ends of the bottom distance varying support;
a distance varying slider, connected to the bottom distance varying support and capable of sliding on the distance varying slide rail in a fitted manner, where four distance varying sliders are respectively disposed at the two ends of the corresponding bottom distance varying support; and
a distance varying drive assembly, disposed on the workbench and connected to the bottom distance varying support, so as to drive the distance varying slider to slide along the distance varying slide rail.

The distance varying slider is driven by the distance varying drive assembly to slide along the distance varying slide rail, so that a distance between the two bottom distance varying supports can be adjusted.

In the multi-row pre-stacking mechanism, the distance varying drive assembly is located at one end of the bottom distance varying support, the fixed end limiting mechanism is located at one end of the first fixed support, and the fixed end positioning mechanism is located on the bottom distance varying support and disposed adjacent to the fixed end limiting mechanism.

In this way, driven by the distance varying drive assembly, the bottom distance varying support and the fixed end positioning mechanism move together to adapt to the first column of multi-row battery cells with different specifications, and no additional driving member is needed, thereby reducing overall manufacturing costs.

In some embodiments, in the multi-row pre-stacking mechanism, the fixed end positioning mechanism includes fixed end clamping mechanisms respectively disposed on two sides of the fixed end limiting mechanism, and the fixed end clamping mechanism includes:
a fixed end clamping cylinder, disposed on a corresponding bottom distance varying support;
a fastening base, being drivably connected to the fixed end clamping cylinder; and
a fixed end clamping block, disposed on the fastening base to clamp a smaller side end of the first column of multi-row battery cells in the multi-row battery module under the action of the fixed end clamping cylinder.

The two fixed end clamping cylinders move the fixed end clamping blocks to clamp a smaller side end of the first column of multi-row battery cells in the multi-row battery module, so as to position the first column of multi-row battery cells and reduce their offset, thereby improving a larger side alignment accuracy of the first column of multi-row battery cells and the second column of multi-row battery cells.

In some embodiments, the fixed end clamping mechanism includes a fixed end base plate disposed on the corresponding bottom distance varying support, and the fixed end limiting mechanism includes:
a center limiting piece, disposed on the workbench and configured to limit a middle part of a larger side of the first column of multi-row battery cells; and
an edge limiting piece, where two edge limiting pieces are disposed on corresponding fixed end base plates respectively and configured to limit an edge of a larger side of the first column of multi-row battery cells.

In this way, the center limiting piece and the edge limiting piece jointly limit the larger side of the first column of multi-row battery cells, and when a distance between the two bottom distance varying supports is adjusted, the two edge limiting pieces can be adjusted accordingly, so as to adapt to battery cells with different specifications.

In some embodiments, in the single-row pre-stacking mechanism, the fixed end positioning mechanism is a fixed end pressing mechanism, and the fixed end pressing mechanism includes:
a lifting base, disposed on the workbench;
a fixed end pressing cylinder, being drivably connected to the lifting base; and
a fixed end pressing block, disposed on the lifting base to press an upper side of the first column of battery cells in the single-row battery module under the action of the fixed end pressing cylinder.

The fixed end pressing cylinder drives the fixed end pressing block to press an upper side of the first column of battery cells in the single-row battery module, so as to position the first column of single-row battery cells, thereby avoiding displacement when being in contact with the subsequent single-row battery cells and affecting larger side fitting accuracy.

In some embodiments, the fixed end pressing mechanism includes:
a fixed end moving cylinder, being drivably connected to the lifting base, so that the fixed end pressing block is capable of moving along a length direction of the bottom support.

The fixed end moving cylinder drives the fixed end pressing block to retract, so that a space above the single-row battery module is vacated, and a pre-stacked single-row battery module can be grasped conveniently.

In some embodiments, in the single-row pre-stacking mechanism, the fixed end limiting mechanism is located at one end of the bottom support, and the fixed end pressing mechanism is located at a side of the fixed end limiting mechanism away from the bottom support.

It can be understood that the fixed end pressing mechanism at the side of the fixed end limiting mechanism away from the bottom support increases the occupation of a three-dimensional space above the workbench, and also reduces the occupation of the workbench surface, thereby making an overall layout more compact.

In some embodiments, in the single-row pre-stacking mechanism, the bottom support includes two second fixed supports that are spaced apart; and
a spacing distance between the two second fixed supports is 80 mm and a width range of each second fixed support is 50 mm; or
the spacing distance between the two second fixed supports ranges from 70 mm to 90 mm, and the width range of each second fixed support ranges from 40 mm to 60 mm.

In this way, the single-row pre-stacking mechanism may be applied to the pre-stacking of the single-row battery cells with a width of not less than 80 mm, and may also be supported by the two second fixed supports when a size of the single-row battery cells is relatively large.

In some embodiments, two single-row pre-stacking mechanisms are provided, and the two single-row pre-stacking mechanisms are arranged side by side, and the pre-stacking mechanism includes:
a uniform height base plate, disposed on the workbench, where in the two single-row pre-stacking mechanisms, the bottom plate support, the fixed end limiting mechanism, and the fixed end positioning mechanism are all disposed on the uniform height base plate.

In this way, the bottom plate support, the fixed end limiting mechanism, and the fixed end positioning mechanism of the two single-row pre-stacking mechanisms share one reference plate, so that the single-row battery module on the two single-row pre-stacking mechanisms have a same height, which is convenient for the battery production line to grab and move out components.

In some embodiments, the centering clamping assembly includes:
two centering clamping blocks, configured to clamp the single column of battery cells;
two racks, each connected to one centering clamping block;
a gear, located between the two racks and separately engaged with the two racks;
a centering driving source, being drivably connected to one of the racks or drivably connected to the gear, so as to adjust a distance between the two centering clamping blocks; and
a centering bottom plate, where the centering clamping block, the rack, the gear, and the centering driving source are all disposed on the centering bottom plate, and the centering moving assembly is drivably connected to the centering bottom plate.

It can be understood that because the gear is located between and engaged with the two racks, the two centering clamping blocks connecting the racks can move synchronously and reversely, and the overall centering is good, and the clamped battery cells are in a relatively fixed position each time, so as to ensure that a larger side of the stacked columns of battery cells can be accurately aligned.

In some embodiments, the centering driving source is a centering driving cylinder that is drivably connected to one of the racks.

It can be understood that the centering driving cylinder can drive one of the racks to move reciprocally in a straight line, and the linear movement of the rack is transmitted to the other rack through the rotation of the engaged gears, so that the other rack moves reciprocally in a straight line in an opposite direction. Therefore, the two centering clamping blocks can move towards or away from each other.

In some embodiments, the centering driving source is a centering motor that is drivably connected to the gear.

It can be understood that the centering motor drives the gear to rotate, and the rotating gear drives the two racks to move towards or away from each other. Therefore, the two centering clamping blocks can move towards or away from each other.

In some embodiments, the centering moving assembly includes:
a centering slide rail, disposed on the workbench, where two centering slide rails are respectively supported at two ends of the centering clamping assembly;
a centering slider, connected to the centering clamping assembly and capable of sliding on the centering slide rail in a fitted manner, where four centering sliders are respectively disposed at the two ends of the corresponding centering clamping assembly; and
a centering drive assembly, disposed on the workbench and connected to the centering clamping assembly, so as to drive the centering slider to slide along the centering slide rail.

It can be understood that the centering clamping assembly and the corresponding centering slider, as a whole, are driven by the centering drive assembly to slide along the centering slide rail, thereby moving between the two ends of the bottom support.

In some embodiments, two single-row pre-stacking mechanisms are provided, and the two single-row pre-stacking mechanisms are arranged side by side.

In the two single-row pre-stacking mechanisms, the centering clamping block, the rack, the gear, and the centering driving source are all disposed on a same centering bottom plate.

The centering clamping block, the rack, the gear, and the centering driving source of the two single-row pre-stacking mechanisms share a same installation benchmark, so that consistency of the two single-row pre-stacking mechanisms in their own height direction is improved.

In some embodiments, the pre-stacking mechanism further includes:
a plurality of position detection mechanisms, each configured to detect a position of a corresponding centering clamping mechanism.

It can be understood that both the single-row pre-stacking mechanism and the multi-row pre-stacking mechanism detect a position of the corresponding centering clamping mechanism by using the position detection mechanism.

In some embodiments, the position detection mechanism includes:
a sensing plate, disposed on the centering clamping mechanism; and
a plurality of position sensors, spaced apart on the workbench and configured to sense a position of the sensing plate.

It can be understood that the sensing plate can move among a plurality of position sensors, and the position sensors can sense a position of the sensing plate, so as to detect a position of the centering clamping mechanism.

In some embodiments, the position sensors are divided into a maximum limit position sensor, a minimum limit position sensor, and a calibrated position sensor, and the calibrated position sensor is located between the maximum limit position sensor and the minimum limit position sensor.

The maximum limit position sensor is configured to detect a maximum limit position of the centering clamping mechanism, the minimum limit position sensor is configured to detect a minimum limit position of the centering clamping mechanism, and the calibrated position sensor is configured to calibrate a position of the centering clamping mechanism.

The maximum limit position sensor and the minimum limit position sensor are distributed at two ends of a moving stroke of the sensing plate, so as to softly limit a stroke of the centering clamping mechanism. The calibrated position sensor is configured to re-calibrate an origin and calibrate the position of the centering clamping mechanism.

In some embodiments, the pre-stacking mechanism further includes:
a plurality of stroke limiting pieces, each configured to limit a stroke of a corresponding centering clamping mechanism and a corresponding fixed end positioning mechanism.

The stroke limiting piece is provided in the stroke of the centering clamping mechanism, so that a stroke of the centering clamping assembly is limited, thereby limiting a force of the centering clamping assembly to clamp the battery cell. Similarly, the stroke limiting piece is disposed in a stroke of the fixed end positioning mechanism, so that a force of the fixed end positioning mechanism clamping the battery cell is limited.

In some embodiments, the stroke limiting piece includes a hydraulic buffer and/or a rigid limiting piece.

The hydraulic buffer is configured to buffer collision. The rigid limiting piece is configured to perform rigid limiting to accurately limit its centering stroke, so as to prevent it from moving beyond a stroke in a centering process affecting a centering effect.

In some embodiments, one multi-row pre-stacking mechanism is provided, and two single-row pre-stacking mechanisms are provided, the two single-row pre-stacking mechanisms are arranged side by side, and the multi-row pre-stacking mechanism is arranged side by side with the two single-row pre-stacking mechanisms.

It can be understood that the two single-row pre-stacking mechanisms and the multi-row pre-stacking mechanisms are arranged side by side, so as to facilitate a production line to fetch a multi-row battery module or a single-row battery module.

In some embodiments, the pre-stacking mechanism further includes:
a battery cell detection mechanism, disposed on the workbench and configured to detect presence of the battery modules on the multi-row pre-stacking mechanism and the single-row pre-stacking mechanism and detect heights of the battery modules on the multi-row pre-stacking mechanism and the single-row pre-stacking mechanism.

Heights of battery modules on the multi-row pre-stacking mechanism and the single-row pre-stacking mechanism are detected, so as to confirm whether specifications of the battery modules are correct.

In some embodiments, the workbench includes:
a cabinet; and
a bottom reference plate, disposed on the cabinet, where the multi-row pre-stacking mechanism and the single-row pre-stacking mechanism are both disposed on the bottom reference plate.

The bottom reference plate is provided with an installation location for installing the multi-row pre-stacking mechanism and the single-row pre-stacking mechanism.

In some embodiments, the bottom reference plate includes a first reference plate and a second reference plate arranged side by side, the first reference plate and the second reference plate each are provided with an installation location, the first reference plate is configured to install the multi-row pre-stacking mechanism, and the second reference plate is configured to install the single-row pre-stacking mechanism.

In this way, the multi-row pre-stacking mechanism and the single-row pre-stacking mechanism are located on different reference plates, thereby reducing a negative impact on one component caused by factors such as vibration of another component.

A second aspect of an embodiment of this disclosure provides a battery production line, including the pre-stacking mechanism according to any one of the foregoing embodiments;
a manipulator; and
a mounting table with an installation location for assembling a battery, where the manipulator is capable of moving the multi-row battery module or the single-row battery module to the installation location for assembly.

### BRIEF DESCRIPTION OF DRAWINGS

FIG. 1 is a structural schematic diagram of a pre-stacking mechanism for battery module according to one or more embodiments;
FIG. 2 is a structural schematic diagram of a multi-row pre-stacking mechanism of a pre-stacking mechanism according to one or more embodiments;
FIG. 3 is a structural schematic diagram of a single-row pre-stacking mechanism of a pre-stacking mechanism according to one or more embodiments;
FIG. 4 is a structural schematic diagram of a centering clamping mechanism and a movable end limiting mechanism of a multi-row pre-stacking mechanism according to one or more embodiments;
FIG. 5 is a structural schematic diagram of a bottom support and a bottom distance varying mechanism of a multi-row pre-stacking mechanism according to one or more embodiments;
FIG. 6 is a structural schematic diagram of a fixed end positioning mechanism of a multi-row pre-stacking mechanism according to one or more embodiments;
FIG. 7 is a structural schematic diagram of two single-row pre-stacking mechanisms according to one or more embodiments;
FIG. 8 is a structural schematic diagram of a centering clamping assembly according to one or more embodiments;
FIG. 9 is a locally enlarged schematic diagram of A in FIG. 8;
FIG. 10 is a partial structural schematic diagram of two single-row pre-stacking mechanisms according to one or more embodiments; and
FIG. 11 is a structural schematic diagram of a workbench according to one or more embodiments.

Reference signs are described as follows:
workbench 10; cabinet 11; cabinet body 111; support pin 112; bottom reference plate 12; first reference plate 121; second reference plate 122;
multi-row pre-stacking mechanism 20; bottom support 21; first fixed support 211; bottom distance varying support 212; second fixed support 213; fixed end limiting mechanism 22; center limiting piece 221; edge limiting piece 222; fixed end positioning mechanism 23; fixed end clamping mechanism 231; fixed end clamping cylinder 2311; fastening base 2312; fixed end clamping block 2313; fixed end base plate 232; centering clamping mechanism 24; centering clamping assembly 241; centering clamping block 2411; centering connection portion 24111; centering clamping head 24112; first butting surface 24112a; second butting surface 24112b; rack 2412; gear 2413; centering driving source 2414; centering bottom plate 2415; centering clamping guide rail 2416; centering moving assembly 242; centering slide rail 2421; centering drive assembly 2422; movable end limiting mechanism 25; movable limiting block 251; avoidance groove 251a; connecting block 252; bottom distance varying mechanism 26; distance varying slide rail 261; distance varying slider 262; distance varying drive assembly 263;
single-row pre-stacking mechanism 30; fixed end pressing mechanism 31; lifting base 311; fixed end pressing cylinder 312; fixed end pressing block 313; fixed end moving cylinder 314;
multi-row battery cell 40;
single-row battery cell 50;
uniform height base plate 60;
position detection mechanism 70; position sensor 71; maximum limit position sensor 71a; minimum limit position sensor 71c; calibrated position sensor 71b; sensing plate 72;
stroke limiting piece 80; hydraulic buffer 81; rigid limiting piece 82; and
battery cell detection mechanism 90.

### DESCRIPTION OF EMBODIMENTS

The following describes in detail the embodiments of technical solutions of this disclosure with reference to the accompanying drawings. The following embodiments are merely intended for a clearer description of the technical solutions of this disclosure and therefore are used as just examples which do not constitute any limitations on the protection scope of this disclosure.

Unless otherwise defined, all technical and scientific terms used in this specification have the same meanings as those usually understood by persons skilled in the art of this disclosure. The terms used in the specification are merely intended to describe specific embodiments but not intended to constitute any limitation on this disclosure. The terms "include" and "have" and any variations thereof in this disclosure are intended to cover non-exclusive inclusion.

In the description of the embodiments of this disclosure, the technical terms "first", "second", "third" and the like are merely intended to distinguish between different objects, and shall not be understood as any indication or implication of relative importance or any implicit indication of the number, sequence or primary-secondary relationship of the technical features indicated. In the description of the embodiments of this disclosure, the meaning of "a plurality of" is two or more than two, unless otherwise specifically defined.

Reference to "embodiment" in this specification means that specific features, structures, or characteristics described with reference to the embodiment may be included in at least one embodiment of this disclosure. The word "embodiment" appearing in various places in this specification does not necessarily refer to the same embodiment or an independent or alternative embodiment that is exclusive of other embodiments. Persons skilled in the art explicitly and implicitly understand that the embodiments described in this specification may combine with another embodiment.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this disclosure, the technical terms "a width direction of a battery module", "a length direction of a battery module", and "upper" indicate the orientation or positional relationship only for the convenience of describing the embodiments of this disclosure and simplifying the description, and do not indicate or imply that the referred devices or elements must have a specific orientation, be constructed, operated or used in a specific orientation, so they cannot be understood as limitations to the embodiments of this disclosure.

In the description of the embodiments of this disclosure, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this disclosure as appropriate to specific situations.

In the description of the embodiments of this disclosure, unless otherwise specified and defined explicitly, the technical term "contact" should be broadly understood, which can be direct contact, contact through an intermediate medium layer, contact with no interaction force between the two in contact, or contact with interaction force between the two in contact.

Currently, new energy batteries are increasingly widely used in life and industry. New energy batteries have been widely used in energy storage power supply systems such as hydroelectric power plants, thermal power plants, wind power plants, and solar power plants, as well as in many other fields including electric transportation tools such as electric bicycles, electric motorcycles, and electric vehicles, and aerospace. With continuous expansion of an application field of traction batteries, a market demand thereof is also constantly increasing.

In the embodiments of this disclosure, the battery may be a battery cell. The battery cell is a basic unit that can implement the mutual conversion between chemical energy and electric energy, and can be used to make battery modules or battery packs, so as to supply power to electric devices. The battery cell may be a secondary battery, and the secondary battery is a battery cell that can activate active materials and continue to be used after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery. This is not limited in the embodiments of this disclosure.

The battery module includes a plurality of battery cells, and each battery cell is stacked to form the battery module. It is necessary to control the stacking accuracy in the process of battery cell stacking, which makes the stacking efficiency difficult to adapt to the speed of a production line.

In this regard, in the related art, the battery cells are pre-stacked before stacking, that is, the battery cells are stacked in advance, and then the pre-stacked battery cells are transported to the battery module assembly position for stacking, thereby reducing the difficulty of battery precision control and improving the stacking efficiency to meet the speed requirements of the production line.

Because the battery cell includes double-row battery cells and single-row battery cells, and the number of double-row battery cells and single-row battery cells in the battery modules with different specifications is different. Therefore, the existing pre-stacking mechanism is difficult to meet efficiency requirements of a production line.

Based on the above considerations, the embodiments of this disclosure provides a pre-stacking mechanism for battery module. Both the single-row pre-stacking mechanism and the multi-row pre-stacking mechanism are disposed on the workbench, so that the pre-stacking of the multi-row battery cells and the single-row battery cells can be implemented, thereby improving the efficiency. When the model of the battery module changes, resulting in the change of the number of the multi-row battery cells or the single-row battery cells, it is unnecessary to adjust a pre-stacking mechanism with the single-row pre-stacking mechanism and the multi-row pre-stacking mechanism, which can quickly adapt to the above changes and improve the overall efficiency of the battery production line.

Solutions of the embodiments of this disclosure are applied to a battery production line, and the single-row battery cells in the battery production line flow into the pre-stacking mechanism and form a single-row battery module after pre-stacking. The multi-row battery cells in the battery production line flow into the pre-stacking mechanism, and a multi-row battery module is formed after pre-stacking. The single-row battery module and the multi-row battery module continue to flow to a mounting table of the battery production line for battery assembly.

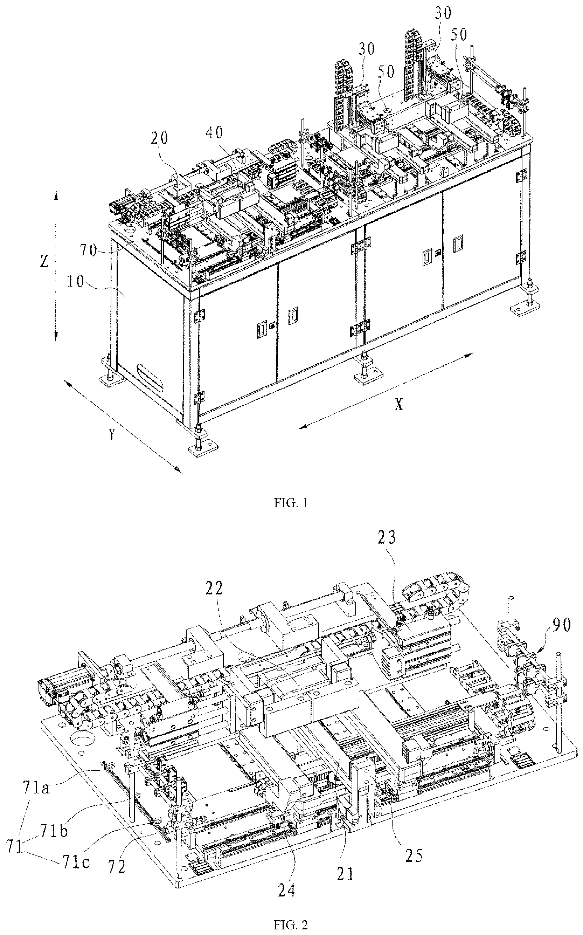

Referring to FIG. 1 to FIG. 10, a pre-stacking mechanism for battery module includes a workbench 10, a multi-row pre-stacking mechanism 20, and a single-row pre-stacking mechanism 30.

The multi-row pre-stacking mechanism 20 is configured to pre-stack multi-row battery cells 40 to form a multi-row battery module, and the single-row pre-stacking mechanism 30 is configured to pre-stack single-row battery cells 50 to form a single-row battery module. Both the single-row pre-stacking mechanism 30 and the multi-row pre-stacking mechanism 20 are disposed on the workbench 10.

The workbench 10 is an installation foundation of the multi-row pre-stacking mechanism 20 and the single-row pre-stacking mechanism 30. The workbench 10 may be supported on the ground.

The multi-row battery cells 40 are a plurality of battery cells arranged side by side. For example, the multi-row battery cells 40 may be double-row battery cells, that is, two battery cells arranged side by side. It may also be three-row or four-row battery cells. The single-row battery cells 50 is a single battery cell. The multi-row battery cells 40 being two battery cells arranged side by side is used as an example for description.

The battery cell may be a rectangular battery cell. It should be noted that a direction of a row is a length direction Y of the battery module in FIG. 1, and a direction of a column is a width direction X of the battery module in FIG. 1. The multi-row battery cells 40 means a plurality of battery cells arranged side by side in the length direction Y of the battery module.

The multi-row pre-stacking mechanism 20 is configured to pre-stack the multi-row battery cells 40 to form a multi-row battery module, which means that at least two multi-row battery cells 40 are pre-stacked before the multi-row battery cells 40 are stacked to form a multi-row battery module, so that a larger side of at least two multi-row battery cells 40 are aligned to form a multi-row battery module. The larger side of the battery cell is a side with a larger area of the battery cell. In FIG. 1, the larger side is two sides of the multi-row battery cells 40 or the single-row battery cells 50 in a length direction of the battery cells.

The single-row pre-stacking mechanism 30 is configured to pre-stack single-row battery cells 50 to form a single-row battery module. Specifically, before the single-row battery cells 50 is stacked to form the battery module, at least two single-row battery cells 50 are pre-stacked, so that the larger side of the at least two single-row battery cells 50 are aligned to form the single-row battery module.

The number of the single-row pre-stacking mechanisms 30 and the multi-row pre-stacking mechanisms 20 on the workbench 10 is not limited. For example, one single-row pre-stacking mechanism 30 and one multi-row pre-stacking mechanism 20 are provided; or two single-row pre-stacking mechanisms 30 and one multi-row pre-stacking mechanism 20 are provided.

Both the single-row pre-stacking mechanism 30 and the multi-row pre-stacking mechanism 20 are disposed on the workbench 10, so that the pre-stacking of the multi-row battery cells 40 and the single-row battery cells 50 can be implemented, thereby improving the efficiency. In addition, when the model of the battery module changes, resulting in the change of the number of the multi-row battery cells 40 or the single-row battery cells 50, it is unnecessary to adjust a pre-stacking mechanism with the single-row pre-stacking mechanism 30 and the multi-row pre-stacking mechanism 20, which can quickly adapt to the above changes, thereby further improving the efficiency and matching the overall efficiency of the battery production line.

For example, referring to FIG. 2 to FIG. 4, the pre-stacking mechanism includes a bottom support 21, a fixed end limiting mechanism 22, a fixed end positioning mechanism 23, and a centering clamping mechanism 24.

The bottom support 21 is configured to support a battery module. The fixed end limiting mechanism 22 is located at one end of the bottom support 21 and configured to limit a larger side of the first column of battery cells in the battery module. The fixed end positioning mechanism 23 is located at one end of the bottom support 21 and configured to position the first column of battery cells to fix a position of the first column of battery cells. The centering clamping mechanism 24 includes a centering clamping assembly 241 and a centering moving assembly 242. The centering clamping assembly 241 is configured to center on and clamp a single column of battery cells in the battery module, and the centering moving assembly 242 enables the centering clamping assembly 241 to move between two ends of the bottom support 21.

A group of the bottom support 21, the centering clamping mechanism 24, the fixed end positioning mechanism 23, and the fixed end limiting mechanism 22 is provided and configured as the multi-row pre-stacking mechanism 20. A group of the bottom support 21, the centering clamping mechanism 24, the fixed end positioning mechanism 23, and the fixed end limiting mechanism 22 is provided and configured as the single-row pre-stacking mechanism 30. Therefore, the pre-stacking of the multi-row battery cells 40 and the single-row battery cells 50 can be implemented.

It can be understood that both the single-row pre-stacking mechanism and the multi-row pre-stacking mechanism include a bottom support 21, a fixed end limiting mechanism 22, a fixed end positioning mechanism 23, and a centering clamping mechanism 24.

The bottom support 21 is configured to support the battery module, so as to provide a positioning reference for a bottom side of each pre-stacked battery cell.

It can be understood that one end of the bottom support 21 is provided with a placing area, battery cells of the production line are placed at the placing area, another end of the bottom support 21 is provided with a limiting area, and the fixed end limiting mechanism 22 is located at the end with the limiting area.

The fixed end limiting mechanism 22 is configured to limit a larger side of the first column of battery cells in the battery module, so as to provide a positioning reference for the larger side of the first column of battery cells in the battery module. The larger side of the first column of battery cells facing away from the fixed end limiting mechanism 22 may be used as a positioning reference for a larger side of the second column of battery cells.

The fixed end positioning mechanism 23 and the fixed end limiting mechanism 22 are located at a same end of the bottom support 21, and the fixed end positioning mechanism 23 can fix a position of the first column of battery cells, so that when the second column of battery cells abuts against the first column of battery cells, the first column of battery cells does not deviate, thereby ensuring larger side alignment accuracy of the first column of battery cells and the second column of battery cells.

The centering clamping assembly 241 is configured to center on and clamp the single column of battery cells in the battery module, so as to position two smaller sides of the single column of battery cells. The smaller side is a side with a smaller area of the battery cell.

The centering moving assembly 242 enables the centering clamping assembly 241 to move between the two ends of the bottom support 21. Specifically, after the single column of battery cells are clamped by the centering clamping assembly 241, the centering clamping assembly 241 cramping the single column of battery cells is driven by the centering moving assembly 242 to move toward the fixed end limiting mechanism 22, so that the fixed end limiting mechanism 22 limits the larger side of the first column of battery cells in the battery module, or the larger side of the first column of battery cells located in front of the fixed end limiting mechanism 22 limits the next column of battery cells. It can be understood that the single column of battery cells in the multi-row pre-stacking mechanism 20 are multi-row battery cells 40, and the single column of battery cells in the single-row pre-stacking mechanism 30 are the single-row battery cells 50.

In the single-row battery module or the multi-row battery module, the number of columns of battery cells is not limited. In some embodiments, the battery cells are arranged in two columns, that is, the first column of battery cells and the second column of battery cells.

The single-row battery module or the multi-row battery module including only the first column of battery cells or the second column of battery cells is used as an example to describe a working process: the battery module is placed on and supported by the bottom support 21, the centering clamping assembly 241 centers on and clamps the first column of battery cells in the battery module, the centering moving assembly 242 drives the centering clamping assembly 241 cramping the first column of the battery cells to moves towards the fixed end positioning mechanism 23 until the single column of battery cells abut against the fixed end positioning mechanism 23 for positioning, the centering moving assembly 242 drives the centering clamping assembly 241 to move back, the centering clamping assembly 241 clamps the second column of battery cells, and the centering moving assembly 242 drives the centering clamping assembly 241 cramping the second column of the battery cells to move towards the fixed end positioning mechanism 23, so that a larger side of the second column of the battery cells is aligned with and abutted against a larger side of the first column of the battery cells.

It can be understood that for the multi-row battery cells 40 with two battery cells, because the two battery cells are arranged side by side, the centering clamping mechanism 24 can only be clamped on a smaller side of the two battery cells facing away from each other, when the two battery cells move on the bottom support 21, the two battery cells will easily deflect each other due to their moving friction with the bottom support 21, which will affect alignment accuracy between multiple columns of the multi-row battery cells 40.

In this regard, in some embodiments, referring to FIG. 2, the pre-stacking mechanism includes a movable end limiting mechanism 25 that is disposed in the multi-row pre-stacking mechanism 20, configured to limit a middle part of a larger side of a single column of the multi-row battery cells 40 in the multi-row battery module, and capable of moving between the two ends of the bottom support 21.

The movable end limiting mechanism 25 can be supported in the middle part of the larger side of the single column of the multi-row battery cells 40. When the centering clamping assembly 241 clamps the single column of multi-row battery cells 40 to move, the movable end limiting mechanism 25 can be supported on the single column of multi-row battery cells 40, so as to reduce the deviation problem in the moving path.

The movable end limiting mechanism 25 may be connected to the centering moving assembly 242 and driven by the centering moving assembly 242, so that the movable end limiting mechanism 25 can move at the same speed and in the same direction of the centering clamping assembly 241. In addition, it is unnecessary to dispose a separate driving member to reduce overall manufacturing costs.

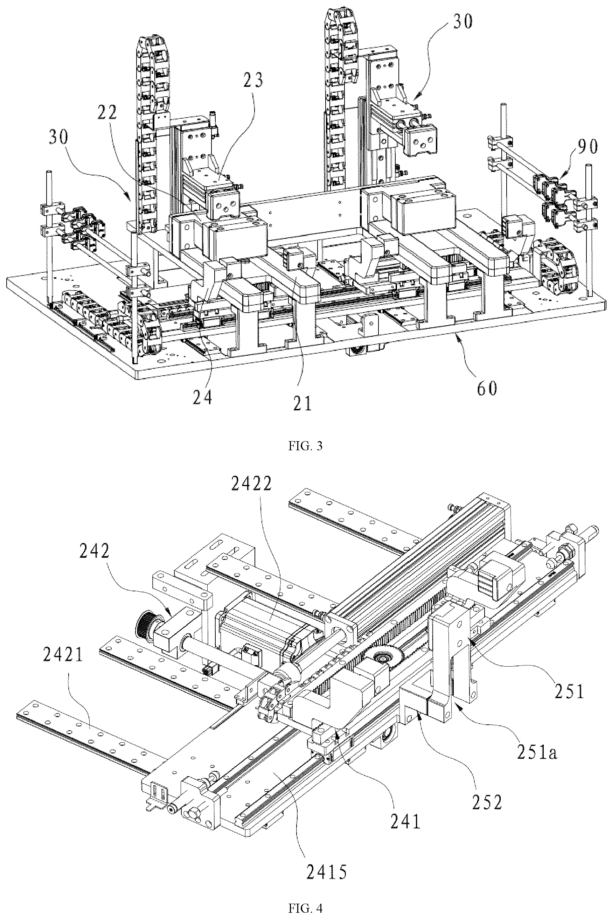

A structure of the movable end limiting mechanism 25 is not limited. In some embodiments, referring to FIG. 4, the movable end limiting mechanism 25 includes a movable limiting block 251. One end of the movable limiting block 251 is fixed to the centering moving assembly 242, and another end of the movable limiting block 251 extends upward above the bottom support 21, that is, into a moving path of the multi-row battery cells 40, so as to limit the multi-row battery cells 40 in a process of following a movement of the multi-row battery cells 40. A part of the movable limiting block 251 below a supporting side of the bottom support 21 may be provided with an avoidance groove 251a, and the avoidance groove 251a is configured to avoid a part of a structure of the bottom support 21.

The movable end limiting mechanism 25 may further include a connecting block 252. The connecting block 252 is connected between the movable limiting block 251 and the centering moving assembly 242, so that the movable limiting block 251 is far away from the fixed end limiting mechanism 22 in a moving direction of the movable limiting block 251, thereby avoiding a placing area of the bottom support 21.

The movable end limiting mechanism 25 is disposed, so that the movable end limiting mechanism 25 limits a middle part of a larger side of the single column of the multi-row battery cells 40, the movable end limiting mechanism 25 moves with the centering clamping assembly 241, and the movable end limiting mechanism 25 supports the middle part of the larger side of the single column of the multi-row battery cells 40 during the movement, so as to resist the deflection and inclination caused by friction.

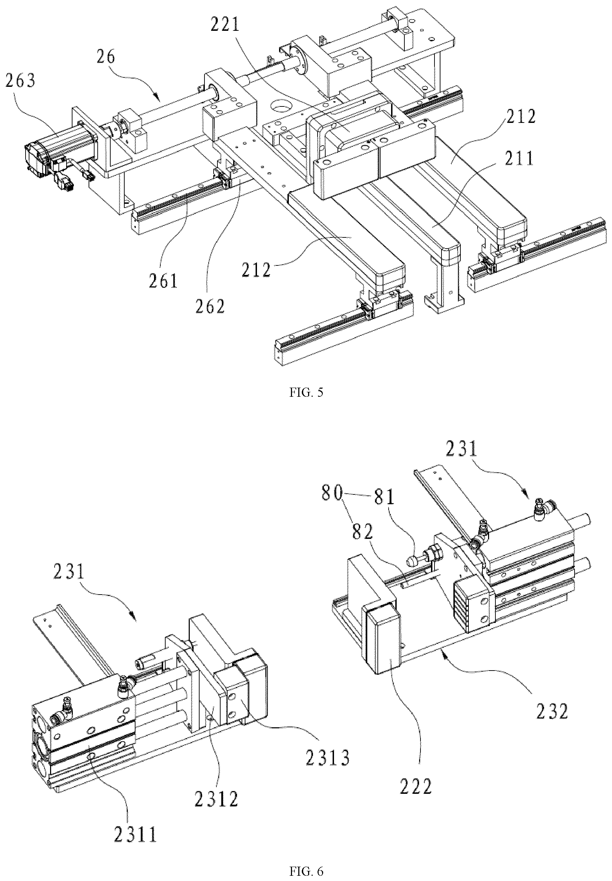

In some embodiments, referring to FIG. 5, in the multi-row pre-stacking mechanism 20, the bottom support 21 includes a first fixed support 211, and the multi-row battery cells 40 are supported by the first fixed support 211. The first fixed support 211 is disposed on the workbench 10 to maintain a fixed position with the workbench 10.

In some embodiments, the pre-stacking mechanism includes a bottom distance varying mechanism 26 configured in the multi-row pre-stacking mechanism 20. In the multi-row pre-stacking mechanism 20, the bottom support 21 includes a first fixed support 211 and a bottom distance varying support 212, the first fixed support 211 is disposed on the workbench 10, and two bottom distance varying supports 212 are symmetrically disposed on two sides of the first fixed support 211. The bottom distance varying mechanism 26 is separately drivably connected to the two bottom distance varying supports 212 to adjust a distance between the two bottom distance varying supports 212.

The first fixed support 211 is supported in the middle of the bottom of the multi-row battery cells 40, that is, at one end of the bottom of two battery cells of the multi-row battery cells 40 that are close to each other. It can be understood that the avoidance groove 251a of the movable end limiting block is configured to avoid the first fixed support 211.

The two bottom distance varying supports 212 are symmetrically disposed on two sides of the first fixed support 211, so as to be symmetrically supported at one end of the bottom of the two battery cells of the multi-row battery cells 40 that are far away from each other.

The bottom distance varying mechanism 26 can drive the two bottom distance varying supports 212 to move toward or away from the first fixed support 211, thereby adjusting a distance between each bottom distance varying support 212 and the first fixed support 211, so as to adapt to the multi-row battery cells 40 with different specifications.

The first fixed support 211 and the two bottom distance varying supports 212 may be strip-shaped support plate bodies. An upper side of the strip-shaped support plate body is a strip-shaped support side for supporting the battery cell.

The first fixed support 211 is supported in the middle of the bottom of the multi-row battery cells 40, the two bottom distance varying supports 212 are supported on two sides of the bottom of the multi-row battery cells 40, and the distance between the two bottom distance varying supports 212 can be adjusted, so as to adapt to the multi-row battery cells 40 with different specifications.

For example, the bottom distance varying mechanism 26 includes a distance varying slide rail 261, a distance varying slider 262, and a distance varying drive assembly 263. The distance varying slide rail 261 is disposed on the workbench 10, and the two distance varying slide rails 261 are respectively supported at two ends of the bottom distance varying support 212. The distance varying slider 262 is connected to the bottom distance varying support 212 and capable of sliding on the distance varying slide rail 261 in a fitted manner. Four distance varying sliders 262 are respectively disposed at the two ends of the corresponding bottom distance varying support 212. The distance varying drive assembly 263 is disposed on the workbench 10 and connected to the bottom distance varying support 212 to drive the distance varying slider 262 to slide along the distance varying slide rail 261.

The distance varying slide rail 261 is configured to guide movement of the bottom distance varying support 212.

The distance varying drive assembly 263 may be a combination of a double-headed screw and a motor. The motor drives the double-headed screw to rotate, so that two screw nuts on the double-headed screw move towards or away from each other, so that the two bottom distance varying supports 212 and a corresponding slider move towards or away from each other along the distance varying slide rail 261. A moving direction of the two bottom distance varying supports 212 is perpendicular to a moving direction of the centering clamping assembly 241.

For example, referring to FIG. 2 and FIG. 5, in the multi-row pre-stacking mechanism 20, the distance varying drive assembly 263 is located at one end of the bottom distance varying support 212, the fixed end limiting mechanism 22 is located at one end of the first fixed support 211, and the fixed end positioning mechanism 23 is located on the bottom distance varying support 212 and disposed adjacent to the fixed end limiting mechanism 22.

The fixed end positioning mechanism 23 is located on the distance varying support and disposed adjacent to the fixed end limiting mechanism 22. In this way, driven by the distance varying drive assembly 263, the bottom distance varying support 212 and the fixed end positioning mechanism 23 move together to adapt to the first column of multi-row battery cells 40 with different specifications, and no additional driving member is needed, thereby reducing overall manufacturing costs.

For example, referring to FIG. 6, in the multi-row pre-stacking mechanism 20, the fixed end positioning mechanism 23 includes fixed end clamping mechanisms 231 respectively disposed on two sides of the fixed end limiting mechanism 22. The fixed end clamping mechanism 231 includes a fixed end clamping cylinder 2311, a fastening base 2312, and a fixed end clamping block 2313.

The fixed end clamping cylinder 2311 is disposed on a corresponding bottom distance varying support 212. The fastening base 2312 is drivably connected to the fixed end clamping cylinder 2311. The fixed end clamping block 2313 is disposed on the fastening base 2312 to clamp a smaller side end of the first column of multi-row battery cells 40 in the multi-row battery module under the action of the fixed end clamping cylinder 2311.

The fixed end clamping cylinder 2311 is disposed on a corresponding bottom distance varying support 212. In this way, when a distance between the bottom distance varying supports 212 is adjusted to adapt to the multi-row battery cells 40 with different specifications, the fixed end clamping cylinders 2311 on two sides can follow the movement, thereby adapting to the multi-row battery cells 40 with different specifications.

The fixed end clamping block 2313 is disposed on the fastening base 2312, and the fastening base 2312 is drivably connected to the fixed end clamping cylinder 2311. Therefore, the fixed end clamping cylinder 2311 drives the fastening base 2312 and the fixed end clamping block 2313 to move and clamp the smaller side end of the first column of multi-row battery cells 40.

The fixed end clamping block 2313 may be a rubber block or a plastic block, so that the fixed end clamping block 2313 is flexibly contacted to the battery cell during clamping, so as to reduce possibility of damaging the battery cell.

The fixed end clamping block 2313 is moved by the fixed end clamping cylinder 2311 to clamp the smaller side end of the first column of multi-row battery cells 40 in the multi-row battery module, so as to position the first column of multi-row battery cells 40 and reduce their offset, further improving larger side alignment accuracy of the first column of multi-row battery cells 40 and the second column of multi-row battery cells 40.

For example, referring to FIG. 6, in the multi-row pre-stacking mechanism 20, the fixed end clamping mechanism 231 includes a fixed end base plate 232, and the fixed end base plate 232 is disposed on a corresponding bottom distance varying support 212.

Referring to FIG. 2, FIG. 5, and FIG. 6, the fixed end limiting mechanism 22 includes a center limiting piece 221 and an edge limiting piece 222.

The center limiting piece 221 is disposed on the workbench 10, and the center limiting piece 221 is configured to limit a middle part of a larger side of the first column of multi-row battery cells 40. Two edge limiting pieces 222 are disposed on corresponding fixed end base plates 232 respectively and configured to limit an edge of a larger side of the first column of multi-row battery cells 40.

The center limiting piece 221 is configured to limit a middle part of a larger side of the first column of multi-row battery cells 40, and the two edge limiting pieces 222 respectively limit the larger side of the first column of multi-row battery cells 40. In this way, the center limiting piece 221 and the edge limiting piece 222 jointly limit the larger side of the first column of multi-row battery cells 40, thereby increasing a supporting area of the larger side of the first column of multi-row battery cells 40 and reducing its extrusion deformation in the pre-stacking process.

The fixed end base plate 232 is disposed on a corresponding bottom distance varying support 212, and the two edge limiting pieces 222 are disposed on the corresponding fixed end base plates 232 respectively. In this way, when a distance between the two bottom distance varying supports 212 is adjusted, the two edge limiting pieces 222 can be adjusted accordingly, so as to adapt to change of battery cell specifications.

In some embodiments, in the single-row pre-stacking mechanism 30, the fixed end limiting mechanism 22 only includes a center limiting piece 221, and the center limiting piece 221 limits a larger side of the first column of single-row battery cells 50, thereby reducing overall manufacturing costs.

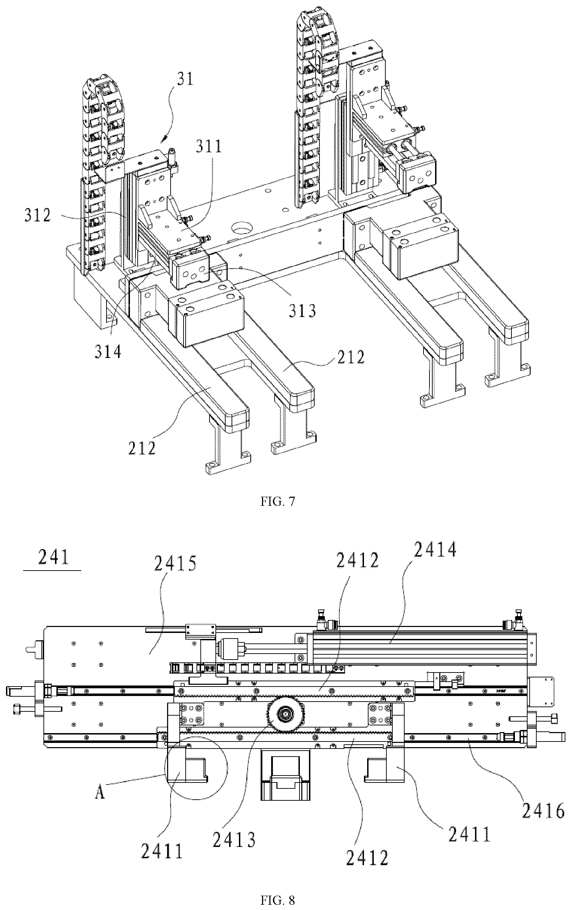

For example, referring to FIG. 7, in the single-row pre-stacking mechanism 30, the fixed end positioning mechanism 23 is a fixed end pressing mechanism 31 including a lifting base 311, a fixed end pressing cylinder 312, and a fixed end pressing block 313.

The lifting base 311 is disposed on the workbench 10. The fixed end pressing cylinder 312 is drivably connected to the lifting base 311. The fixed end pressing block 313 is disposed on the lifting base 311 to press an upper side of the first column of battery cells of the single-row battery module under the action of the fixed end pressing cylinder 312.

The fixed end pressing cylinder 312 may be an electric cylinder or an air cylinder, and the lifting base 311 is fixed to a telescopic rod of the fixed end pressing cylinder 312, so that the fixed end pressing cylinder 312 is drivably connected to the lifting base 311.

The fixed end pressing block 313 may be a plastic or rubber block and flexibly contacted to single-row battery cells 50.

It can be understood that after the first column of battery cells is limited by the fixed end limiting mechanism 22, the fixed end pressing cylinder 312 drives the fixed end pressing block 313 to press an upper side of the first column of battery cells in the single-row battery module, so as to position the first column of single-row battery cells 50 and avoid displacement when it contacts with subsequent single-row battery cells 50.

In some embodiments, the fixed end pressing mechanism 31 includes a fixed end moving cylinder 314, and the fixed end moving cylinder 314 is drivably connected to the lifting base 311, so that the fixed end pressing block 313 can move along a length direction of the bottom support 21. The length direction of the bottom support 21 may be a length direction y of the battery module in FIG. 1.

The fixed end moving cylinder 314 may be an electric cylinder or an air cylinder. A telescopic rod of the fixed end moving cylinder 314 is fixed to the lifting base 311, so that the fixed end moving cylinder 314 is drivably connected to the lifting base 311.

The fixed end moving cylinder 314 is drivably connected to the lifting base 311 to drive the fixed end pressing block 313 on the lifting base 311 to move along a length direction of the bottom support 21. That is, the fixed end moving cylinder 314 can drive the fixed end pressing block 313 to extend out until the fixed end pressing block 313 is directly above the first column of battery cells in the single-row battery module. That is, a projection of the fixed end pressing block 313 in the Z direction partially or completely overlaps with the first column of battery cells in the single-row battery module. The fixed end pressing cylinder 312 drives the fixed end pressing block 313 to press down on the first column of battery cells. After the fixed end pressing cylinder 312 drives the fixed end pressing block 313 to move up to release positioning on the first column of battery cells, the fixed end moving cylinder 314 can drive the fixed end pressing block 313 to retract, thereby withdrawing from a space above the single-row battery module, and a pre-stacked single-row battery module can be grasped conveniently.

For example, in the single-row pre-stacking mechanism 30, the fixed end limiting mechanism 22 is located at one end of the bottom support 21, and the fixed end pressing mechanism 31 is located at a side of the fixed end limiting mechanism 22 away from the bottom support 21. It can be understood that, compared with the fixed end limiting mechanism 22 disposed at two sides, the fixed end pressing mechanism 31 at the side of the fixed end limiting mechanism 22 away from the bottom support 21 increases the occupation of a three-dimensional space above the workbench 10, that is, reduces the occupation of a surface of the workbench 10, making an overall layout more compact.

It can be understood that in the single-row pre-stacking mechanism 30, the bottom support 21 includes a second fixed support 213. The second fixed support 213 is configured to support the single-row battery cells 50. The number of the second fixed supports 213 is not limited, and may be one or more.

In some embodiments, in the single-row pre-stacking mechanism 30, the bottom support 21 includes two second fixed supports 213 that are spaced apart. A spacing distance between the two second fixed supports 213 is 70 mm to 90 mm, and a width range of each second fixed support 213 is 40 mm to 60 mm.

The spacing distance between the two second fixed supports 213 may be 70 mm, 80 mm, or 90 mm, and the width of each second fixed support may be 40 mm, 50 mm, or 60 mm.

A bottom of the single-row battery cell 50 is supported by two second fixed supports 213 spaced apart, and the two second fixed supports 213 spaced apart increase a supporting distance along a width direction of the single-row battery cells 50, thereby improving supporting stability. The width direction of the battery cell is a width direction X of the battery module shown in FIG. 1, and a corresponding length direction of the battery cell is a length direction Y of the battery module shown in FIG. 1.

It can be understood that because the spacing distance between the two second fixed supports 213 is 80 mm, when the width of the single-row battery cells 50 is less than 80 mm, it will not be supported by the two second fixed supports 213. Therefore, the single-row pre-stacking mechanism 30 in this embodiment may only be applied to the single-row battery cells 50 with a width dimension of not less than 80 mm. In some embodiments, referring to FIG. 3, two single-row pre-stacking mechanisms 30 are provided, and the two single-row pre-stacking mechanisms 30 are arranged side by side. The pre-stacking mechanism includes a uniform height base plate 60, and the uniform height base plate 60 is disposed on the workbench 10. In the two single-row pre-stacking mechanisms 30, the bottom support 21, the fixed end limiting mechanism 22, and the fixed end positioning mechanism 23 are all disposed on the uniform height base plate 60.

Providing two single-row pre-stacking mechanisms 30 can improve a speed of the pre-stacking single-row battery cells 50.

In the two single-row pre-stacking mechanisms 30, the bottom support 21, the fixed end limiting mechanism 22, and the fixed end positioning mechanism 23 are all disposed on the uniform height base plate 60. That is, the bottom support 21, the fixed end limiting mechanism 22, and the fixed end positioning mechanism 23 of the two single-row pre-stacking mechanisms 30 share one reference plate, so that the single-row battery module on the two single-row pre-stacking mechanisms 30 have a same height, which is convenient for the battery production line to grab and move out components.

For example, referring to FIG. 8, the centering clamping assembly 241 includes two centering clamping blocks 2411, two racks 2412, a gear 2413, a centering driving source 2414, and a centering bottom plate 2415.

Two centering clamping blocks 2411 are configured to clamp a single column of battery cells. Each rack 2412 is connected to one centering clamping block 2411. The gear 2413 is located between the two racks 2412 and separately engaged with the two racks 2412. The centering driving source 2414 is drivably connected to one of the rack 2412 or the gear 2413 to adjust a distance between the two centering clamping blocks 2411.

The centering clamping block 2411, the rack 2412, the gear 2413, and the centering driving source 2414 are all disposed on the centering bottom plate 2415, and the centering moving assembly 242 is drivably connected to the centering bottom plate 2415.

The two centering clamping blocks 2411 are distributed on opposite sides of a single column of battery cells along a width direction. Two racks 2412 are engaged with the gear 2413, and each rack 2412 is connected to one centering clamping block 2411. The centering driving source 2414 drives one of the rack 2412 to move or drives the gear 2413 to rotate, so that the two centering clamping blocks 2411 move towards or away from each other, thereby clamping or releasing the single column of battery cells. It can be understood that because the two racks 2412 is engaged with the gear 2413, a moving speed and a moving distance of the two centering clamping blocks 2411 are the same, and the overall centering is good, and the clamped battery cells are in a relatively fixed position each time, so as to ensure that a larger side of the stacked columns of battery cells can be accurately aligned.

A structure of the centering clamping block 2411 is not limited. In some embodiments, the centering clamping block 2411 includes a centering connection portion 24111 and a centering clamping head 24112 disposed on the centering connection portion 24111, and the two centering clamping heads 24112 are oppositely arranged along a moving direction of the rack 2412. The centering clamping head 24112 may be disassembled and replaced to facilitate maintenance.

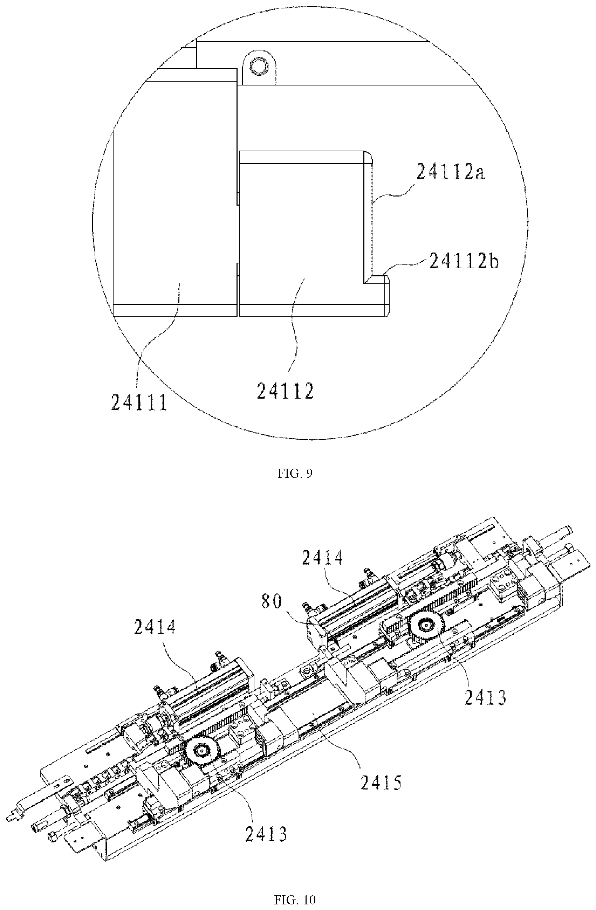

A structure of the centering clamping head 24112 is not limited. In some embodiments, referring to FIG. 9, the centering clamping head 24112 includes a first butting surface 24112a and a second butting surface 24112b, and the first butting surface 24112a and the second butting surface 24112b enclose a clamping groove. When the battery cell is clamped, a part of the battery cell is in the clamping groove, the first butting surface 24112a is opposite to a smaller side of the battery cell, and the second butting surface 24112b is opposite to a larger side of the battery cell, so that the battery cell is limited and clamped.

The centering bottom plate 2415 is an installation benchmark for the centering clamping block 2411, the rack 2412, the gear 2413, and the centering driving source 2414. The centering moving assembly 242 drives the centering bottom plate 2415 and components disposed on the centering bottom plate 2415 to move.

In some embodiments, referring to FIG. 8, the centering clamping assembly 241 further includes two centering clamping guide rails 2416 and a centering clamping slider. The centering clamping sliders are divided into two groups and are in sliding fit with the two centering clamping guide rails 2416, and each rack 2412 is relatively fixed with one group of centering clamping sliders. A driving direction of the centering driving source 2414 is parallel to the centering clamping guide rail 2416. The centering driving source 2414 drives a rack 2412 and a corresponding group of centering clamping slider to move along the centering clamping guide rail 2416, so that the centering clamping blocks 2411 can move linearly relative to each other and be clamped symmetrically on the battery cell, thereby reducing possibility of a larger side deflection of the battery cell caused by asymmetric clamping.

In some embodiments, the centering driving source 2414 is a centering driving cylinder drivably connected to one of the racks 2412. The centering driving cylinder can drive one of the racks 2412 to reciprocate linearly in a straight line, and the linear movement of the rack 2412 is transmitted to the other rack 2412 through the rotation of the engaged gears 2413, so that the other rack 2412 moves reciprocally in a straight line in an opposite direction. Therefore, the two centering clamping blocks 2411 can move towards or away from each other.

The centering driving cylinder may be an electric cylinder or an air cylinder, and purchasing costs are relatively low.

In some embodiments, the centering driving source 2414 is a centering motor drivably connected to the gear 2413. The centering motor drives the gear 2413 to rotate, and the rotating gear 2413 drives the two racks 2412 to move in a straight line towards or away from each other. Therefore, the two centering clamping blocks 2411 can move towards or away from each other. Compared with a solution of the centering driving cylinder, control precision of the centering motor is relatively higher, and moving positions of the two centering clamping blocks 2411 can be effectively controlled, so that a clamping force of the battery cell can be accurately controlled.

For example, referring to FIG. 4, the centering moving assembly 242 includes a centering slide rail 2421, a centering slider, and a centering drive assembly 2422.

The centering slide rail 2421 is disposed on the workbench 10, and the two centering slide rails 2421 are respectively supported at two ends of the centering clamping assembly 241. The centering slider is connected to the centering clamping assembly 241 and capable of sliding on the centering slide rail 2421 in a fitted manner, and four centering sliders are respectively disposed at the two ends of the corresponding centering clamping assembly 241. The centering drive assembly 2422 is disposed on the workbench 10 and connected to the centering clamping assembly 241, so as to drive the centering slider to slide along the centering slide rail 2421.

The centering slide rail 2421 can guide the centering slider to slide. Each centering slide rail 2421 is disposed in parallel. In FIG. 1, the centering slide rail 2421 is disposed along a length direction of the battery cell.

Two centering slide rails 2421 or more than two centering slide rails, such as four, may be provided.

The centering clamping assembly 241 and a corresponding centering slider as a whole slide along the centering slide rail 2421 driven by the centering drive assembly 2422, so as to move between two ends of the bottom support 21. The centering bottom plate 2415 may be disposed on the centering slider, and is driven by the centering drive assembly 2422 to slide along the centering slide rail 2421.

A structure of the centering drive assembly 2422 is not limited. In some embodiments, the centering drive assembly 2422 includes a motor, a lead screw assembly, and a timing belt assembly. Power of the motor is transmitted to the lead screw assembly through the timing belt assembly, and lead screw rotation of the lead screw assembly drives a lead screw nut and the centering bottom plate 2415 to move along a lead screw.

For example, referring to FIG. 10, two single-row pre-stacking mechanisms 30 are provided, and the two single-row pre-stacking mechanisms 30 are arranged side by side. In the two single-row pre-stacking mechanisms 30, the centering clamping block 2411, the rack 2412, the gear 2413, and the centering driving source 2414 are all disposed on a same centering bottom plate 2415.

Two single-row pre-stacking mechanisms 30 are arranged side by side. That is, two adjacent single-row pre-stacking mechanisms 30 are arranged in a row on the workbench 10.

The centering clamping block 2411, the rack 2412, the gear 2413, and the centering driving source 2414 of the two single-row pre-stacking mechanisms 30 share a same installation benchmark, so that consistency of the two single-row pre-stacking mechanisms 30 in their own height direction is improved.

For example, referring to FIG. 1, the pre-stacking mechanism further includes a plurality of position detection mechanisms 70, and the plurality of position detection mechanisms 70 are configured to detect a position of a corresponding centering clamping mechanism 24.

It can be understood that both the single-row pre-stacking mechanism 30 and the multi-row pre-stacking mechanism 20 include a position detection mechanism 70 to detect a position of the corresponding centering clamping mechanism 24.

A structure of the position detection mechanism 70 is not limited, and may be a contact position detection mechanism 70 or a non-contact position detection mechanism 70. In some embodiments, referring to FIG. 2, the position detection mechanism 70 includes a plurality of position sensors 71 and a sensing plate 72. The sensing plate 72 is disposed on the centering clamping mechanism 24, and a plurality of position sensors 71 are spaced apart on the workbench 10 and configured to sense the sensing plate 72.

It can be understood that the sensing plate 72 can move among a plurality of position sensors 71, and the position sensors 71 can sense a position of the sensing plate 72, so as to detect a position of the centering clamping mechanism 24.

In some embodiments, referring to FIG. 2, the position sensors 71 are divided into a maximum limit position sensor 71a, a minimum limit position sensor 71c, and a calibrated position sensor 71b. The calibrated position sensor 71b is located between the maximum limit position sensor 71a and the minimum limit position sensor 71c.

The maximum limit position sensor 71a is configured to detect a maximum limit position of the centering clamping mechanism 24, the minimum limit position sensor 71c is configured to detect a minimum limit position of the centering clamping mechanism 24, and the calibrated position sensor 71b is configured to calibrate a position of the centering clamping mechanism 24.

The maximum limit position sensor 71a and the minimum limit position sensor 71c are distributed at two ends of a moving stroke of the sensing plate, so as to softly limit a stroke of the centering clamping mechanism 24. For example, when the sensing plate is detected by the maximum limit position sensor 71a or the minimum limit position sensor 71c, the centering drive assembly 2422 is stopped and an alarm is sent off, so as to softly limit the centering clamping mechanism 24.

The calibrated position sensor 71b is configured to re-calibrate an origin and calibrate the position of the centering clamping mechanism. For example, after an impact, it is necessary to re-calibrate an origin position of a stroke, and at the same time, the calibrated position sensor 71b may be configured for recalibration.

For example, referring to FIG. 6 and FIG. 10, the pre-stacking mechanism further includes a plurality of stroke limiting pieces 80. Each of the plurality of stroke limiting pieces 80 is configured to limit a stroke of a corresponding centering clamping mechanism 24 and a corresponding fixed end positioning mechanism 23.

Each of the plurality of stroke limiting pieces 80 is configured in a moving stroke of the centering clamping mechanism 24 and the fixed end clamping block 2313. Specifically, to limit a minimum size between two centering clamping blocks 2411 when the centering clamping mechanism 24 clamps the battery cell, the stroke limiting piece 80 is disposed at one end of the centering clamping mechanism 24 to control a force of the centering clamping blocks 2411 clamping the battery cell. Similarly, the stroke limiting piece 80 is disposed at one end of the fixed end positioning mechanism 23 to control a force of the fixed end clamping block 2313 clamping the battery cell.

In some embodiments, referring to FIG. 10, the stroke limiting piece 80 includes a hydraulic buffer 81 and a rigid limiting piece 82. The hydraulic buffer 81 is configured to buffer collision. The rigid limiting piece 82 is configured to perform rigid limiting to accurately limit its centering stroke, so as to prevent it from moving beyond a stroke in a centering process affecting a centering effect. Relative positions of the hydraulic buffer 81 and the rigid limiting piece 82 are not limited. The fixed end clamping mechanism 231 is used as an example, the hydraulic buffer 81 and the rigid limiting piece 82 are disposed on the fastening base 2312. In a clamping stroke of the fixed end clamping mechanism 231, the hydraulic buffer 81 is located in front of the rigid limiting piece 82. That is, when the fixed end clamping cylinder 2311 extends, the hydraulic buffer 81 first contacts a blocking panel to decelerate, and then the rigid limiting piece 82 contacts the blocking panel to perform rigid limiting.

In some embodiments, the stroke limiting piece 80 includes a hydraulic buffer 81 or a rigid limiting piece 82.

For example, referring to FIG. 1, one multi-row pre-stacking mechanism 20 and two single-row pre-stacking mechanisms 30 are provided, the two single-row pre-stacking mechanisms 30 are arranged side by side, and the multi-row pre-stacking mechanisms 20 and the two single-row pre-stacking mechanisms 30 are arranged side by side.

It can be understood that the two single-row pre-stacking mechanisms 30 and the multi-row pre-stacking mechanisms 20 are arranged side by side, and the multi-row pre-stacking mechanism 20 is disposed on one side of the two single-row pre-stacking mechanisms 30, so as to facilitate a production line to fetch a multi-row battery module or a single-row battery module.

In some embodiments, the single-row pre-stacking mechanism 30 may be adjusted to be compatible with a single-row battery module with a width range from 90 mm to 173 mm and a length range from 0 mm to 280 mm.

In some embodiments, the multi-row pre-stacking mechanism 20 may be adjusted to be compatible with a multi-row battery module with a width range from 173 mm to 273 mm and a length range from 0 mm to 280 mm.

For example, referring to FIG. 2 and FIG. 3, the pre-stacking mechanism further includes a battery cell detection mechanism 90. The battery cell detection mechanism 90 is disposed on the workbench 10 and configured to detect presence of the battery modules on the multi-row pre-stacking mechanism 20 and the single-row pre-stacking mechanism 30 and detect heights of the battery modules on the multi-row pre-stacking mechanism 20 and the single-row pre-stacking mechanism 30.

It can be understood that when battery cells in the battery production line flow into the pre-stacking mechanism, the battery cell detection mechanism 90 detects and confirms presence of the battery cells, which can trigger the centering clamping mechanism 24 to act, so as to center and clamp a battery module. When the battery cell is limited by the fixed end limiting mechanism 22, the battery cell detection mechanism 90 detects and confirms presence of the limited battery cell, which can trigger the fixed end positioning mechanism 23 to limit a battery module.

Heights of the battery modules on the multi-row pre-stacking mechanism 20 and the single-row pre-stacking mechanism 30 are detected, so as to confirm whether specifications of the battery modules are correct and whether a placement angle is correct. When it is detected that the battery module is too high, it can send out warning information.

An arrangement structure of the battery cell detection mechanism 90 is not limited. In some embodiments, the battery cell detection mechanisms 90 are distributed on opposite sides of the bottom support 21 along a width direction of the battery cell. An infrared ray emitted from one side is received by another side. When the battery module is excessively high, the infrared ray is blocked, so that a detection signal is obtained.

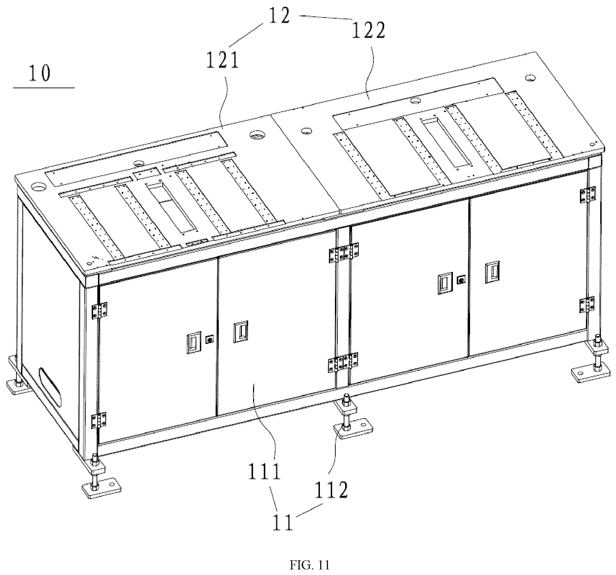

For example, referring to FIG. 11, the workbench 10 includes a cabinet 11 and a bottom reference plate 12. The bottom reference plate 12 is disposed on the cabinet 11. The multi-row pre-stacking mechanism 20 and the single-row pre-stacking mechanism 30 are both disposed on the bottom reference plate 12. The bottom reference plate 12 is provided with an installation location for installing the multi-row pre-stacking mechanism 20 and the single-row pre-stacking mechanism 30.

The bottom reference plate 12 may be a whole plate, so that the multi-row pre-stacking mechanism 20 and the single-row pre-stacking mechanism 30 have a same installation benchmark.

A wiring hole and an installation slot may be provided in an installation location, so as to facilitate wiring, and positioning and installation of components partially disposed on the workbench 10.

In some embodiments, the cabinet 11 includes a cabinet body 111 and a support pin 112 connected to the cabinet body 111. The support pin 112 is configured to support the cabinet body 111. A height of the support pin 112 may be adjusted, so as to adjust a height and levelness of the bottom reference plate 12.

In some embodiments, the bottom reference plate 12 includes a first reference plate 121 and a second reference plate 122 arranged side by side. The first reference plate 121 and the second reference plate 122 each are provided with an installation location, the first reference plate 121 is configured to install the multi-row pre-stacking mechanism 20, and the second reference plate 122 is configured to install the single-row pre-stacking mechanism 30. In this way, the multi-row pre-stacking mechanism 20 and the single-row pre-stacking mechanism 30 are located on different reference plates, thereby reducing a negative impact on one component caused by factors such as vibration of another component.

In some embodiments, the second reference plate 122 and a uniform height base plate 60 are a same plate. That is, two single-row pre-stacking mechanisms 30 are installed on the second reference plate 122.

An embodiment of this disclosure further provides a battery production line including the pre-stacking mechanism in any one of the foregoing solutions, a manipulator, and a mounting table. The mounting table has an installation location for assembling a battery, and the manipulator is capable of moving the multi-row battery module or the single-row battery module to the installation location for assembly. It can be understood that the single-row battery cells in the battery production line flow into the pre-stacking mechanism, and a single-row battery module is formed after pre-stacking. The multi-row battery cells in the battery production line flow into the pre-stacking mechanism, and a multi-row battery module is formed after pre-stacking. The single-row battery module and the multi-row battery module continue to flow to a mounting table of the battery production line for assembly.

The above embodiments are merely intended for describing the technical solutions of this disclosure, but not for limiting this disclosure. Although this disclosure is described in detail with reference to the above embodiments, persons of ordinary skill in the art should understand that they may still make modifications to the technical solutions described in the above embodiments or make equivalent replacements to some or all technical features thereof. These modifications or replacements do not make the essence of the corresponding technical solutions depart from the scope of the technical solutions in this disclosure, and should be all fall within the scope of the claims and this specification of this disclosure. In particular, as long as there is no structural conflict, the various technical features mentioned in the embodiments can be combined in any manners. This disclosure is not limited to the specific embodiments disclosed herein.

### Industrial practicability

Embodiments of this disclosure provide a pre-stacking mechanism for battery module, including a workbench, a multi-row pre-stacking mechanism, and a single-row pre-stacking mechanism. The multi-row pre-stacking mechanism is configured to pre-stack multi-row battery cells to form a multi-row battery module. The single-row pre-stacking mechanism is configured to pre-stack single-row battery cells to form a single-row battery module. Both the single-row pre-stacking mechanism and the multi-row pre-stacking mechanism are disposed on the workbench. Both the single-row pre-stacking mechanism and the multi-row pre-stacking mechanism are disposed on the workbench, so that the pre-stacking of the multi-row battery cells and the single-row battery cells can be implemented, thereby improving the efficiency. When the model of the battery module changes, resulting in the change of the number of the multi-row battery cells or the single-row battery cells, it is unnecessary to adjust a pre-stacking mechanism with the single-row pre-stacking mechanism and the multi-row pre-stacking mechanism, which can quickly adapt to the above changes and improve the overall efficiency of the battery production line.

## Claims

1. A pre-stacking mechanism for battery module, comprising:
a workbench; and
a multi-row pre-stacking mechanism, configured to pre-stack multi-row battery cells to form a multi-row battery module; and a single-row pre-stacking mechanism, configured to pre-stack single-row battery cells to form a single-row battery module; wherein
both the single-row pre-stacking mechanism and the multi-row pre-stacking mechanism are disposed on the workbench.

2. The pre-stacking mechanism according to claim 1, wherein the pre-stacking mechanism comprises:
a bottom support, configured to support the battery module;
a fixed end limiting mechanism, located at one end of the bottom support and configured to limit a larger side of the first column of battery cells in the battery module; and
a fixed end positioning mechanism, located at one end of the bottom support and configured to position the first column of battery cells to fix a position of the first column of battery cells; and a centering clamping mechanism, comprising a centering clamping assembly and a centering moving assembly, wherein the centering clamping assembly is configured to center on and clamp a single column of battery cells in the battery module, and the centering moving assembly enables the centering clamping assembly to move between two ends of the bottom support; wherein
a group of the bottom support, the centering clamping mechanism, the fixed end positioning mechanism, and the fixed end limiting mechanism is provided and configured as the multi-row pre-stacking mechanism; a group of the bottom support, the centering clamping mechanism, the fixed end positioning mechanism, and the fixed end limiting mechanism is provided and configured as the single-row pre-stacking mechanism.

3. The pre-stacking mechanism according to claim 2, wherein the pre-stacking mechanism comprises:
a movable end limiting mechanism, disposed in the multi-row pre-stacking mechanism, configured to limit a middle part of a larger side of a single column of multi-row battery cells in the multi-row battery module, and being capable of moving between the two ends of the bottom support.

4. The pre-stacking mechanism according to claim 2, wherein the pre-stacking mechanism comprises a bottom distance varying mechanism disposed in the multi-row pre-stacking mechanism;
in the multi-row pre-stacking mechanism, the bottom support comprises a first fixed support and a bottom distance varying support, the first fixed support is disposed on the workbench, and two bottom distance varying supports are symmetrically disposed on two sides of the first fixed support respectively; and
the bottom distance varying mechanism is drivably connected to the two bottom distance varying supports to adjust a distance between the two bottom distance varying supports.

5. The pre-stacking mechanism according to claim 4, wherein the bottom distance varying mechanism comprises:
a distance varying slide rail, disposed on the workbench, wherein two distance varying slide rails are respectively supported at two ends of the bottom distance varying support; and
a distance varying slider, connected to the bottom distance varying support and capable of sliding on the distance varying slide rail in a fitted manner, wherein four distance varying sliders are respectively disposed at the two ends of the corresponding bottom distance varying support; and a distance varying drive assembly, disposed on the workbench and connected to the bottom distance varying support, so as to drive the distance varying slider to slide along the distance varying slide rail.

6. The pre-stacking mechanism according to claim 5, wherein in the multi-row pre-stacking mechanism, the distance varying drive assembly is located at one end of the bottom distance varying support, the fixed end limiting mechanism is located at one end of the first fixed support, and the fixed end positioning mechanism is located on the bottom distance varying support and disposed adjacent to the fixed end limiting mechanism.

7. The pre-stacking mechanism according to claim 4, wherein in the multi-row pre-stacking mechanism, the fixed end positioning mechanism comprises fixed end clamping mechanisms respectively disposed on two sides of the fixed end limiting mechanism, and the fixed end clamping mechanism comprises:
a fixed end clamping cylinder, disposed on a corresponding bottom distance varying support; and
a fastening base, being drivably connected to the fixed end clamping cylinder; and a fixed end clamping block, disposed on the fastening base to clamp a smaller side end of the first column of multi-row battery cells in the multi-row battery module under the action of the fixed end clamping cylinder.

8. The pre-stacking mechanism according to claim 7, wherein the fixed end clamping mechanism comprises a fixed end base plate disposed on the corresponding bottom distance varying support, and the fixed end limiting mechanism comprises:
a center limiting piece, disposed on the workbench and configured to limit a middle part of a larger side of the first column of multi-row battery cells; and an edge limiting piece, wherein two edge limiting pieces are disposed on corresponding fixed end base plates respectively and configured to limit an edge of a larger side of the first column of multi-row battery cells.

9. The pre-stacking mechanism according to claim 2, wherein in the single-row pre-stacking mechanism, the fixed end positioning mechanism is a fixed end pressing mechanism, and the fixed end pressing mechanism comprises:
a lifting base, disposed on the workbench; and
a fixed end pressing cylinder, being drivably connected to the lifting base; and a fixed end pressing block, disposed on the lifting base to press an upper side of the first column of battery cells in the single-row battery module under the action of the fixed end pressing cylinder.

10. The pre-stacking mechanism according to claim 9, wherein the fixed end pressing mechanism comprises:
a fixed end moving cylinder, being drivably connected to the lifting base, so that the fixed end pressing block is capable of moving along a length direction of the bottom support.

11. The pre-stacking mechanism according to claim 9, wherein in the single-row pre-stacking mechanism, the fixed end limiting mechanism is located at one end of the bottom support, and the fixed end pressing mechanism is located at a side of the fixed end limiting mechanism away from the bottom support.

12. The pre-stacking mechanism according to claim 2, wherein in the single-row pre-stacking mechanism, the bottom support comprises two second fixed supports that are spaced apart; and
a spacing distance between the two second fixed supports is 80 mm and a width range of each second fixed support is 50 mm; or
the spacing distance between the two second fixed supports ranges from 70 mm to 90 mm, and the width range of each second fixed support ranges from 40 mm to 60 mm.

13. The pre-stacking mechanism according to claim 2, wherein two single-row pre-stacking mechanisms are provided, and the two single-row pre-stacking mechanisms are arranged side by side, and the pre-stacking mechanism comprises:
a uniform height base plate, disposed on the workbench, wherein in the two single-row pre-stacking mechanisms, the bottom support, the fixed end limiting mechanism, and the fixed end positioning mechanism are all disposed on the uniform height base plate.

14. The pre-stacking mechanism according to claim 2, wherein the centering clamping assembly comprises:
two centering clamping blocks, configured to clamp the single column of battery cells;
two racks, each connected to one centering clamping block;
a gear, located between the two racks and separately engaged with the two racks; and
a centering driving source, being drivably connected to one of the racks or drivably connected to the gear, so as to adjust a distance between the two centering clamping blocks; and a centering bottom plate, wherein the centering clamping block, the rack, the gear, and the centering driving source are all disposed on the centering bottom plate, and the centering moving assembly is drivably connected to the centering bottom plate.

15. The pre-stacking mechanism according to claim 14, wherein the centering driving source is a centering driving cylinder that is drivably connected to one of the racks; or
the centering driving source is a centering motor that is drivably connected to the gear.

16. The pre-stacking mechanism according to claim 14, wherein the centering moving assembly comprises:
a centering slide rail, disposed on the workbench, wherein two centering slide rails are respectively supported at two ends of the centering clamping assembly; and
a centering slider, connected to the centering clamping assembly and capable of sliding on the centering slide rail in a fitted manner, wherein four centering sliders are respectively disposed at the two ends of the corresponding centering clamping assembly; and a centering drive assembly, disposed on the workbench and connected to the centering clamping assembly, so as to drive the centering slider to slide along the centering slide rail.

17. The pre-stacking mechanism according to claim 14, wherein two single-row pre-stacking mechanisms are provided, and the two single-row pre-stacking mechanisms are arranged side by side; and
in the two single-row pre-stacking mechanisms, the centering clamping block, the rack, the gear, and the centering driving source are all disposed on a same centering bottom plate.

18. The pre-stacking mechanism according to any one of claims 2 to 17, wherein the pre-stacking mechanism further comprises:
a plurality of position detection mechanisms, each configured to detect a position of a corresponding centering clamping mechanism.

19. The pre-stacking mechanism according to claim 18, wherein the position detection mechanism comprises:
a sensing plate, disposed on the centering clamping mechanism; and a plurality of position sensors, spaced apart on the workbench and configured to sense a position of the sensing plate.

20. The pre-stacking mechanism according to claim 19, wherein the position sensors are divided into a maximum limit position sensor, a minimum limit position sensor, and a calibrated position sensor, and the calibrated position sensor is located between the maximum limit position sensor and the minimum limit position sensor; and
the maximum limit position sensor is configured to detect a maximum limit position of the centering clamping mechanism, the minimum limit position sensor is configured to detect a minimum limit position of the centering clamping mechanism, and the calibrated position sensor is configured to calibrate a position of the centering clamping mechanism.

21. The pre-stacking mechanism according to any one of claims 2 to 17, wherein the pre-stacking mechanism further comprises:
a plurality of stroke limiting pieces, each configured to limit a stroke of a corresponding centering clamping mechanism and a corresponding fixed end positioning mechanism.

22. The pre-stacking mechanism according to claim 21, wherein the stroke limiting piece comprises a hydraulic buffer and/or a rigid limiting piece.

23. The pre-stacking mechanism according to any one of claims 1 to 17, wherein one multi-row pre-stacking mechanism is provided, and two single-row pre-stacking mechanisms are provided, the two single-row pre-stacking mechanisms are arranged side by side, and the multi-row pre-stacking mechanism is arranged side by side with the two single-row pre-stacking mechanisms.

24. The pre-stacking mechanism according to any one of claims 1 to 17, wherein the pre-stacking mechanism further comprises:
a battery cell detection mechanism, disposed on the workbench and configured to detect presence of the battery modules on the multi-row pre-stacking mechanism and the single-row pre-stacking mechanism and detect heights of the battery modules on the multi-row pre-stacking mechanism and the single-row pre-stacking mechanism.

25. The pre-stacking mechanism according to any one of claims 1 to 17, wherein the workbench comprises:
a cabinet; and a bottom reference plate, disposed on the cabinet, wherein the multi-row pre-stacking mechanism and the single-row pre-stacking mechanism are both disposed on the bottom reference plate; wherein
the bottom reference plate is provided with an installation location for installing the multi-row pre-stacking mechanism and the single-row pre-stacking mechanism.

26. The pre-stacking mechanism according to claim 25, wherein the bottom reference plate comprises a first reference plate and a second reference plate arranged side by side, the first reference plate and the second reference plate each are provided with an installation location, the first reference plate is configured to install the multi-row pre-stacking mechanism, and the second reference plate is configured to install the single-row pre-stacking mechanism.

27. A battery production line, comprising the pre-stacking mechanism according to any one of claims 1 to 26; and
a manipulator; and a mounting table having an installation location for assembling a battery, wherein the manipulator is capable of moving the multi-row battery module or the single-row battery module to the installation location for assembly.
